# EUROPÄISCHE PATENTSCHRIFT

(11) **EP 0 932 162 B1**
(45) Veröffentlichungstag und Bekanntmachung des Hinweises auf die Patenterteilung: **31.03.2004**
(21) Anmeldenummer: 99100691.7
(22) Anmeldetag: 14.01.1999
(51) Int. Cl.: G21C 3/352

(54) **Abstandhalter für ein Brennelement eines Kernkraftwerkes**
Spacer grid for a nuclear fuel assembly
Grille d'espacement pour un assemblage combustible nucléaire

(30) Priorität: 27.01.1998 DE 29801286 U; 04.12.1998 DE 29821676 U; 10.12.1998 DE 19857086
(43) Veröffentlichungstag der Anmeldung: 28.07.1999
(73) Patentinhaber: Framatome ANP GmbH, 91058 Erlangen (DE)
(72) Erfinder: Manzel, Reiner Dipl.-Ing., 90408 Nürnberg (DE); Schmidt, Norbert Dipl.-Ing., 96450 Coburg (DE); Jahreiss, Werner Dipl.-Ing., 90469 Nürnberg (DE); Steven, Josef Dipl.-Ing., 91077 Neunkirchen a. Brand (DE); Dewes, Peter Dipl.-Phys., 91058 Erlangen (DE); Ortlieb, Erhard Dipl.-Phys., 90562 Kalchreuth (DE); Rudolph, Matthias Dipl.-Ing., 91085 Weisendorf (DE); Garzarolli, Friedrich Dipl.-Ing., 91315 Höchstadt (DE); Boekers, Franz-Joseph Dipl.-Ing., 90765 Fürth (DE)
(74) Vertreter: Mörtel & Höfner

(56) Entgegenhaltungen:
- EP-A- 0 527 244
- DE-U- 29 616 582
- US-A- 4 725 402
- US-A- 4 726 926
- US-A- 4 803 043
- US-A- 5 139 736
- US-A- 5 188 797
- US-A- 5 245 644

## Beschreibung

Die Erfindung betrifft einen Abstandhalter für ein Brennelement eines Kernkraftwerkes, insbesondere für ein Brennelement eines Leichtwasserreaktors.

In einem Brennelement werden Abstandhalter zur Fixierung von Brennstäben des Brennelementes eingesetzt. Ein Abstandhalter bildet eine Matrix aus sich kreuzenden Stegen, wobei die vom Abstandhalter überdeckte Grundfläche im wesentlichen der Querschnittsfläche des Brennelementes entspricht. Jeder Steg weist an einem Kreuzungspunkt mit einem kreuzenden Steg einen Fügespalt auf, der den kreuzenden Steg aufnimmt. Die in den Fügespalten geführten und anschließend z.B. durch Schweißen fixierten Stege, bilden Zellen mit im wesentlichen rechteckiger oder quadratischer Grundfläche. Die Brennstäbe - bei Druckwasser-Brennelementen auch die Führungsrohre, bei Siedewasser-Brennelementen auch eventuell vorhandene Wasserstäbe - eines Brennelementes ragen durch diese vom Abstandhalter gebildeten Zellen und sind dort gehalten, werden also in ihrer Lage relativ zur Mittelachse des Brennelementes fixiert.

Entspricht die Breite der Fügspalte der Dicke der Stege, so brauchen die ineinander gefügten Stege nur noch gegen ein Verschieben bei der Montage durch einen Lötpunkt gesichert zu werden, da jeweils auf einen Steg ausgeübte Kräfte bereits von der engen Führung in den Fügespalten aufgenommen werden. In der US 5,245,644 A trägt zur weiteren Erleichterung der Montage der Teil eines Steges, der den Fügespalt eines kreuzenden Steges durchsetzt, zwei Erhebungen, zwischen denen der kreuzende Steg gehalten ist.

Enge Fügespalte sind allerdings nur bei Stegen möglich, die kein Profil tragen sondern flach sind. Bei profilierten Stegen jedoch müssen die Fügespalten mit breiten Schlitzen kombiniert werden, deren Breite sich durch die Forderung ergibt, dass die Profile ein Ineinander-Fügen der Stege nicht behindern dürfen US 5,139,736 und US 5,188,797). Meistens erfordert die Geometrie der Profile, dass die breiten Schlitze der beiden Stege auf dem gleichen Niveau liegen, also dadurch in den Stegen jeweils ein breites Fenster entsteht, das gar nicht von einem Teil des anderen Steges durchsetzt wird, da auch der andere Steg an dieser Stelle ein Fenster aufweist. Solche Fenster können auch anderen Zielen dienen, bei flachen Stegen Vorteile bringen (z.B. sollen sie in der US 4,725,402 eine exakte und leicht zugängliche Position für eine möglichst kleine Lötstelle schaffen).

Derartige Fenster in einem Steg sind keine "Fügespalte" in der Terminologie dieses Patentes, da sie nicht von einem Teil des kreuzenden Steges durchsetzt werden. Sie sind im Stand der Technik aus verschiedenen Gründen vorgeschlagen. Dagegen haben die Fügespalte auf ihrer ganzen Länge oder wenigstens einem großen Teil ihrer Länge eine Breite, die der Wandstärke der den Spalt durchsetzenden Teile des anderen Steges entspricht. Dadurch tragen diese engen Bereiche der Fügespalte wesentlich zur mechanischen Steifheit des Abstandhalters bei, ohne dass ausgedehntere Löt- oder Schweißnähte erforderlich werden.

Bei den Betriebsbedingungen im Kern eines Kernreaktors können die Abstandhalter eines Brennelementes unter Umständen eine Längendehnung erfahren, die zu einer Vergrößerung der Außenabmessungen der Abstandhalter und damit des Brennelementes führen kann.

Die Vergrößerung der Außenabmessungen kann im Extremfall dazu führen, dass beispielsweise bei einem Brennelement für einen Siedewasserreaktor ein vom Abstandhalter gebildetes Brennstabbündel nicht mehr aus einem Brennelementkasten entfernt werden kann.

Bei Brennelementen von Druckwasserreaktoren ist die Längendehnung der Abstandhalter ungewöhnlich groß. Durch die Vergrößerung der Außenabmessungen können Komplikationen mit den benachbarten Brennelementen bei Servicearbeiten und bei der Beladung und Entladung des Reaktorkerns auftreten.

Aufgabe der Erfindung ist es, einen Abstandhalter anzugeben, der während der Betriebsdauer eine geringe Längendehnung erfährt.

Die Aufgabe wird erfindungsgemäß gelöst durch einen Abstandhalter für ein Brennelement eines Kernkraftwerkes, aus gitterartig angeordneten Stegen, wobei jeder Steg an einem Kreuzungspunkt mit einem kreuzenden Steg einen Fügespalt aufweist, der den kreuzenden Steg aufnimmt. Dieser Fügespalt weist höchstens über einen Bruchteil seiner Gesamtlänge eine Breite auf, die im wesentlichen der Wandstärke des kreuzenden Steges entspricht. Der Rest des Fügespaltes ist zwar ebenfalls von Teilen des kreuzenden Steges durchsetzt, besitzt aber eine größere Spaltbreite. Nach einer Variante der Erfindung sind die Stege in den Bereichen mit dem engeren Fügespalt metallurgisch miteinander verbunden, und zwar - im Gegensatz zum eingangs beschriebenen Stand der Technik - auf der ganzen Länge der engeren Bereiche.

Die Erfindung geht von der Erkenntnis aus, dass die Längendehnung eines Abstandhalters unter normalen Betriebsbedingungen durch Korrosion des Abstandhalters hervorgerufen werden kann. Insbesondere an Fügespalten eines aus einer Zirkoniumlegierung, z.B. einem Zircaloy-Blech, bestehenden Abstandhaltersteges kann sich an der Stegwand im Fügespalt nämlich eine Korrosionsschicht ausbilden. Um eine hohe Passgenauigkeit des aus den Stegen zusammengesetzten Abstandhalters zu erreichen, sind die Fügespalten bisher so dimensioniert, dass ihre Breite im wesentlichen der Wandstärke des kreuzenden Steges entspricht. Bei dieser Ausführung des Abstandhalters besteht die Gefahr, dass die Korrosionsschichten, welche von den Rändern der Fügespalten und von der Oberfläche des eingefügten Steges aufeinander zu wachsen, vor Ende der Einsatzdauer aufeinander treffen. Die Korrosionsschichten üben dann einen Festkörperdruck auf den jeweiligen Steg aus, der zu einer Verlängerung des Steges führen kann.

Da jeder Steg eine Vielzahl von Fügespalten und korrosionsgefährdeten Bereichen aufweist, kann die resultierende Gesamtlängendehnung der Stege so groß werden, dass die Änderung der Außenabmessung des Abstandhalters ein kritisches Maß überschreitet. Außerdem kann eine unterschiedliche Längendehnung verschiedener Stege zu Verwindungen einzelner Stege und/oder von Teilen des Abstandhalters führen, was die Strömungseigenschaften des Abstandhalters negativ beeinflusst.

Die Erfindung geht nun von der Überlegung aus, den von den Korrosionsschichten auf einen Steg ausgeübten Festkörperdruck zu reduzieren.

Erfindungsgemäß geschieht dies zum einen, indem die am Kreuzungspunkt mit einem anderen Steg vorgesehenen Fügespalten beider Stege nur über einen Bruchteil ihrer jeweils von Teilen eines Steges durchsetzten Gesamtlänge eine der Wandstärke des kreuzenden Steges entsprechende Breite aufweisen. Durch die metallurgische Verbindung ist die bereits auf den Bruchteil des Fügespalts beschränkte Auflagefläche der beiden Stege auch vor Korrosion geschützt, so dass praktisch keine ungewollte Längendehnung infolge Korrosion auftritt.

Die Länge der Bereiche, in denen die Breite des Fügespaltes im wesentlichen der Wandstärke des kreuzenden Steges entspricht, wird so gewählt, dass die Abstandhaltermatrix eine für nachfolgende Bearbeitungsschritte - wie z.B. das Verschweißen der Stege an den Kreuzungspunkten - und die unter Betriebsbedingungen entstehenden Belastungen ausreichende Festigkeit aufweist. Dadurch wird der Vorteil erreicht, dass die Fügespalten nach dem Verschweißen der Stege nicht in einem zusätzlichen Arbeitsgang, z.B. durch Beizen, aufgeweitet werden müssen, um den durch Korrosion entstehenden Festkörperdruck auf den Steg zu verringern.

Vorteilhafterweise weist jeder Steg auf zumindest einer Seite jedes Fügespaltes im Bereich seines engsten Querschnittes eine dem Fügespalt benachbarte Ausnehmung auf. Dies ergibt den

Vorteil, dass eine im Bereich des engsten Querschnittes des Fügespaltes durch Korrosion hervorgerufene Verformung des Steges durch die Ausnehmung aufgenommen werden kann. Dadurch kann der Festkörperdruck auf den übrigen Teil des Steges weiter verringert werden.

Soll der Steg ohne zusätzliche Ausnehmung nur eine minimale Längenausdehnung aufgrund von Korrosion aufweisen, so ist nach einer anderen Variante der Erfindung die Breite des Fügespaltes praktisch über seine gesamte Länge größer als die Wandstärke des kreuzenden Steges ausgebildet. Um die notwendige Stabilität der aus den Stegen gebildeten Abstandhaltermatrix zu erlangen, weist der Fügespalt entlang seiner Hauptausdehnungsachse nur wenige (aber mindestens drei) Unterstützungspunkte auf, beispielsweise Anlagepunkte oder Anlagebereiche, an denen der Fügespalt den kreuzenden Steg berührt. Die Unterstützungspunkte sind zu beiden Seiten jedes Fügespaltes so angeordnet, dass der kreuzende Steg in einer hinreichend kleinen Umgebung jeweils nur auf einer Seite unterstützt wird. Das hat den Vorteil, dass sich an den wenigen Unterstützungspunkten im Laufe der Betriebsdauer ein Festkörperdruck aufbauen kann, der teilweise den kreuzenden Steg quer zu seiner Hauptausdehnungsrichtung verformen könnte und damit nur zu einem Teil des Festkörperdrucks zur Längendehnung des Stegs beiträgt.

Eine weitere Verminderung des Festkörperdrucks, der zur Längendehnung führt, wird durch Fenster vorteilhaft in der Mitte des Steges erreicht. Vorzugsweise weist jeder Steg mindestens ein entlang einer Fügeachse jedes Fügespaltes angeordnetes Fenster auf. Vorteilhaft mündet jeder Fügespalt jeweils in mindestens eines der Fenster. So werden durch Korrosion gefährdete Stellen im Steg ausgenommen, und zudem wird ein ausreichender Kühlwasserstrom für die in der Umgebung eines Kreuzungspunktes liegenden Bereiche des Abstandhalters ermöglicht, so dass dort die Korrosion gebremst wird.

Ferner sind insbesondere feste Verbindungen zwischen den Stegen vorgesehen, durch die eine Stabilisierung des Abstandhalters erreicht wird. Durch eine solche feste Verbindung der sich kreuzenden Stege an einer Verbindungsstelle, vorzugsweise durch eine metallurgische Verbindung - etwa durch einen Schweißpunkt im Kreuzungsbereich - wird eine Verlängerung des Steges unterdrückt. Außerdem korrodieren häufig metallurgische Verbindungen weniger stark als das unbehandelte Material. Solche metallurgische Verbindungen können z.B. solche Bereiche im Fügespalt ausfüllen, die besonders korrosionsgefährdet wären.

Besonders bewährt haben sich - insbesondere in Druckwasserreaktoren - Abstandhalter mit Stegen, die mindestens zwei wenigstens im Bereich eines Kreuzungspunktes mit einem kreuzenden Steg aneinander anliegende Stegbleche beinhalten. Die gemeinsame Dicke dieser Stegbleche am Kreuzungspunkt entspricht der Wandstärke des Steges. In den Bereichen außerhalb eines Kreuzungspunktes können die Stegbleche gegeneinander verformt und/oder gebogen sein, so daß z.B. zwischen ihnen Strömungskanäle entstehen. Bei Abstandhaltern in Brennelementen für Druckwasserreaktoren gibt es daher eine Reihe weiterer Stellen, außer den Fügespalten, an denen sich die Stege oder die Stegbleche berühren. Zum Teil gibt es Bereiche in denen die Stege, insbesondere die Stegbleche, flächig aneinander anliegen. Aus den bereits bei den Fügespalten erläuterten Gründen sind diese Bereiche ebenfalls bevorzugte Bereiche für Korrosion und/oder für die Ausbildung von Korrosionslinsen und können eine Deformation der Abstandhalter verursachen. Deshalb ist es bei den aus mehreren Stegblechen bestehenden Stegen vorteilhaft, die nebeneinander liegenden Stegbleche, insbesondere im Bereich des Kreuzungspunktes der Stege, miteinander metallurgisch zu verbinden. Insbesondere sind die nebeneinander liegenden Stegbleche an mindestens einer Verbindungsstelle mit dem kreuzenden Steg verbunden, vorzugsweise metallurgisch verbunden. An mindestens einer weiteren Verbindungsstelle können die Stegbleche flächig miteinander verbunden sein, vorzugsweise in einem Bereich in dem sie aneinander anliegen. Letzteres wird insbesondere durch verschweißung an den Stellen erreicht, an denen die Stegbleche flächig aneinander anliegen. Dies kann beispielsweise vorgenommen werden, wenn die Stege zum gitterförmigen Abstandhalter gefügt werden. Zweckmäßig werden die Stegbleche bereits vorher zu Stegen zusammengefügt.

Auch in diesem Fall werden durch Korrosion gefährdete Stellen vermieden, wenn jeder Steg praktisch entlang der ganzen Länge desjenigen Teils jedes Fügespaltes, dessen Breite im wesentlichen der Wandstärke des anderen Steges entspricht, mit dem anderen Steg fest verbunden ist, vorzugsweise metallurgisch verbunden ist. Dadurch entstehen lange Schweißstellen, die bevorzugt entlang des oder der engeren Bereiche der Fügespalten durch Laserstrahl-Schweißen angebracht werden. Im Vergleich zum Elektronenstrahl-Schweißen ist bei den räumlichen Verhältnissen im Abstandhalter durch das Laserstrahl-Schweißen ein längerer Verlauf der Schweißnaht entlang der Fügespalten möglich. Gefährdete Bereiche für Korrosion sind außerdem solche, an denen die Stege und/oder die Stegbleche gebogen sind. Dies betrifft insbesondere Bereiche mit kleinen Biegeradien. Möglicherweise liegt die Ursache dafür in dem verringerten Kühlwasserstrom in solchen Bereichen im Vergleich zu Bereichen, die keine Biegeradien aufweisen. Auch an diesen gefährdeten Stellen und/oder Bereichen können aus den oben genannten Gründen Korrosionsschichten einen Festkörperdruck auf den jeweiligen Steg ausüben, der zu einer Verlängerung des Steges führen kann. Das Anbringen von Ausnehmungen, Fenstern oder festen Verbindungen an solchen durch Korrosion gefährdeten Stellen unterdrückt wirkungsvoll die Längendehnung von Abstandhaltern, da wieder ein ausreichender Kühlwasserstrom gewährleistet wird. Insbesondere können solche Fenster auch durch eine Sicke oder eine Nut realisiert werden. Dies betrifft vorzugsweise auch weitere Fenster oder Ausnehmungen in den Stegen und/oder Stegblechen entlang einer Fügeachse jedes Fügespaltes. Insbesondere betrifft dies auch weitere Verbindungsstellen, welche die Stegbleche flächig miteinander verbindet, insbesondere metallurgisch miteinander verbindet.

Die Aufgabe der Erfindung wird also bei einem Brennelement eines Kernkraftwerkes gelöst durch einen Abstandhalter aus gitterartig angeordneten Stegen, wobei jeder Steg in einem Kreuzungsbereich mit einem kreuzenden Steg einen Fügespalt aufweist, der den kreuzenden Steg aufnimmt. Erfindungsgemäß trägt jeder Fügespalt jedes Steges im Kreuzungsbereich von zwei Stegen in einem Bereich eine metallurgische Verbindung der beiden Stege und ist in einem anderen, von einem Teil des anderen Steges durchsetzten Bereich so breit, daß sich die beiden Stege nicht berühren.

Insbesondere trägt der einen Fügespalt eines anderen Steges durchsetzende Teil eines Steges zwei Erhebungen, zwischen denen der andere Steg gehalten ist. Diese Erhebungen fixieren die sich kreuzenden Stege bevor sie z.B. durch Schweißpunkte oder Schweißnähte miteinander fest verbunden werden.

Anhand der in den Zeichnungen dargestellten Ausführungsbeispiele werden vorteilhafte Ausführungsformen der Erfindung näher erläutert. Die Figuren zeigen in schematischer Darstellung:
- FIG 1: einen Ausschnitt aus einer aus sich kreuzenden Stegen gebildeten Abstandhaltermatrix;
- FIG 2: ein Teilstück zweier sich kreuzender Stege mit Fügespalten, aus einer Abstandhaltermatrix,;
- FIG 3: ein Teilstück zweier sich kreuzender Stege mit Befestigungen zwischen den Stegen und den Außenstreifen eines Abstandhalters nach der Erfindung;
- FIG 4: einen Ausschnitt aus einem Steg mit Fügespalt mit gegenüberliegenden Unterstützungspunkten;
- FIG 5: einen Ausschnitt aus einem Steg mit Fügespalt mit V-förmigem Ende;
- FIG 6: einen Ausschnitt aus einem Steg mit Fügespalt und beidseitig des Fügespaltes angeordneten Ausnehmungen;
- FIG 7: einen Ausschnitt aus einem Steg mit Fügespalt mit vier sich nicht gegenüberliegenden Unterstützungspunkten;
- FIG 8: zwei Stege eines anderen Ausführungsbeispieles am Ort ihres Kreuzungspunktes;
- FIG 9: einen Ausschnitt aus einer aus sich kreuzenden Stegen gebildeten Abstandhaltermatrix mit Außenstreifen, wobei die Stege zwei Stegbleche umfassen;
- FIG 10: einen Ausschnitt aus einem zwei Stegbleche umfassenden Steg mit entlang einer Fügeachse angeordneten Fenstern;
- FIG 11: eine Zelle einer Abstandhaltermatrix aus zwei Stegbleche umfassenden, sich kreuzenden Stegen;
- FIG 12: einen Ausschnitt aus einem Steg nach Figur 10 mit einer entlang des Fügespaltes angebrachten metallurgischen Verbindung der kreuzenden Stege;
- FIG 13: einen Ausschnitt aus einem Steg mit Fügespalt, der in einem Bereich eine metallurgische Verbindung trägt und in einem anderen Bereich breiter als die Wandstärke des kreuzenden Steges ist.

Gleiche Elemente tragen in den Figuren jeweils gleiche Bezugszeichen.

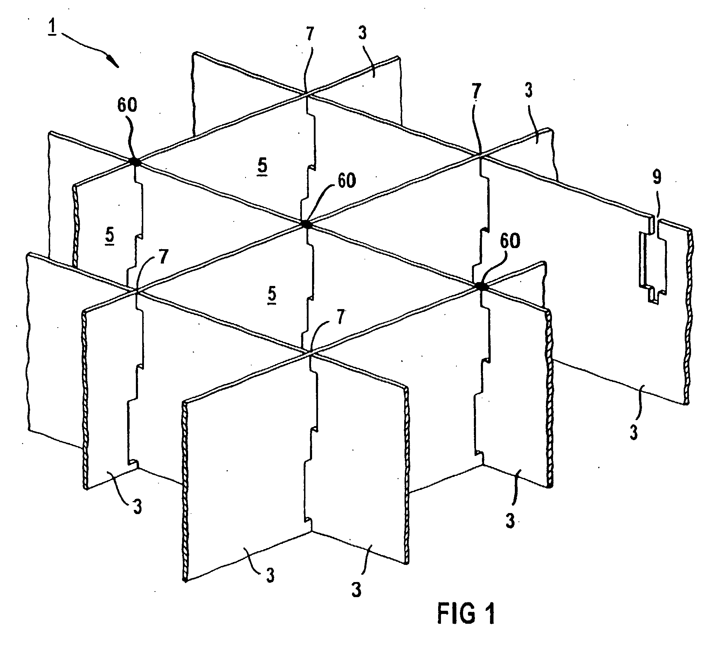

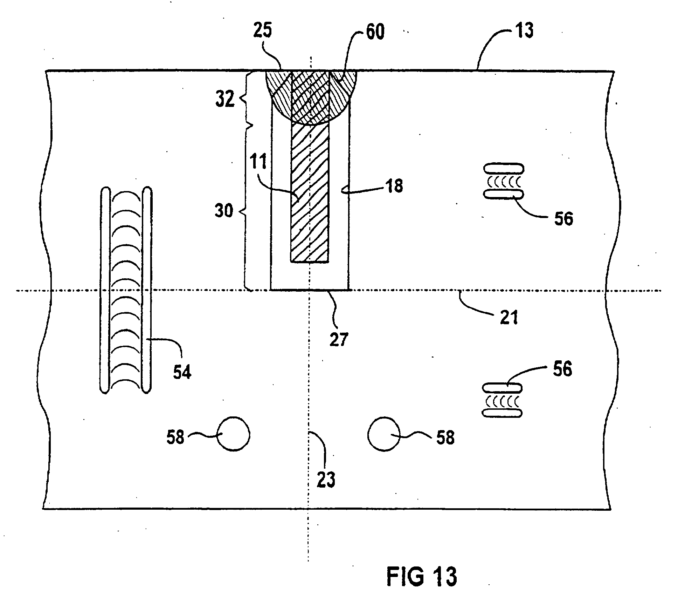

In Figur 1 ist ein Ausschnitt aus einem Abstandhalter 1 eines nicht näher gezeigten Brennelementes dargestellt. Der Abstandhalter 1 ist als Matrix ausgeführt, die von mehreren sich kreuzenden Stegen 3 gebildet wird. Diese sich kreuzenden Stege 3 bilden Zellen 5 mit im wesentlichen quadratischer Grundfläche, durch die (nicht dargestellten) Brennstäbe des Brennelementes ragen. Die Zellen 5 der Abstandhaltermatrix 1 umschließen den Außenumfang der Brennstäbe, die so in ihrer Position relativ zu einer Längsachse des Brennelementes gehalten werden. Dazu tragen die Stege in der Regel Noppen, Federn oder andere Hilfsglieder, die an den Brennstäben angreifen. Die genannten Hilfsmittel, insbesondere Federn 54 und Noppen 56, sind einmal in Figur 13 beispielhaft für andere Zeichnungen dargestellt, in denen diese weggelassen sind. Im vorliegenden Ausführungsbeispiel wird die Abstandhaltermatrix 1 von zwei Gruppen identischer, sich kreuzender, paralleler Stege gebildet. Jeder Steg aus einer Gruppe kreuzt jeden Steg der anderen Gruppe in genau einem Kreuzungspunkt 7 im rechten Winkel. An einem Kreuzungspunkt 7 weist jeder Steg 3 einen Fügespalt 9 auf, der einen Teil der Wandung des jeweils kreuzenden Steges aufnimmt. Außerdem ist im Bereich des Kreuzungspunktes 7 eine metallurgische Verbindung 60 der sich kreuzenden Stege angebracht. Dies sind in der Regel Schweißverbindungen. Es sind aber auch andere Verbindungen denkbar, welche die sich kreuzenden Stege eng aneinander fixieren. Die festen Verbindungen sind vorzugsweise jeweils im Bereich der Kreuzungspunkte am oberen Rand der hochkantstehenden Abstandhaltermatrix als auch entsprechend am unteren Rand der hochkantstehenden Abstandhaltermatrix angebracht. Die metallurgischen Verbindungen beschränken sich jedoch vorteilhaft nicht nur auf den Rand der Abstandhaltermatrix, sondern setzen sich auch vorteilhaft praktisch entlang der ganzen Länge desjenigen Teils jedes Fügespaltes, dessen Breite im wesentlichen der Wandstärke des anderen Steges entspricht, fort.

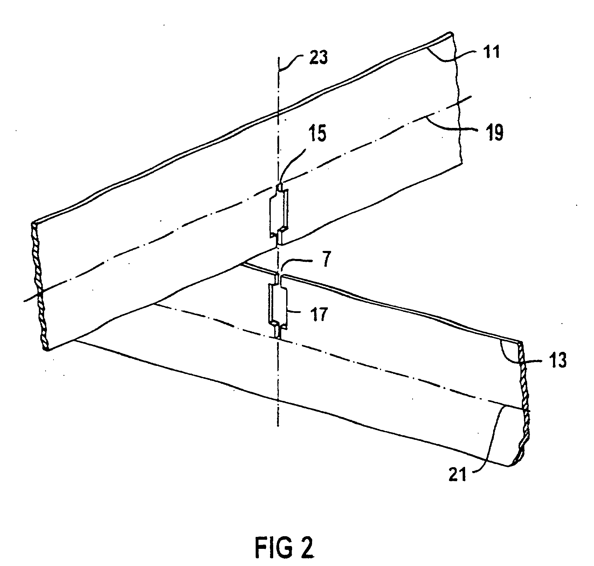

In Figur 2 sind zwei sich kreuzende Stege 11, 13 mit ihren zugehörigen Fügespalten 15, 17 und ihrem Kreuzungspunkt 7 dargestellt. Die sich kreuzenden Stege 11, 13 sind zur besseren Verdeutlichung im Zustand vor dem Zusammenfügen gezeigt. Der obere Steg 11 mit Mittelachse 19 ist der ersten Gruppe der Stege entnommen und der untere Steg 13 mit der Mittelachse 21 der zweiten Gruppe. Die Stege 11, 13 werden entlang einer Fügeachse 23, die senkrecht auf beiden Mittelachsen 19, 21 steht, zusammengefügt. Der Fügespalt 15 des oberen Steges 11 erstreckt sich entlang der Fügeachse 23 von der Mittelachse 13 ab bis zum unteren Rand des oberen Steges 11, während der Fügespalt 17 des unteren Steges 13 analog in umgekehrter Richtung von der Mittelachse 21 auf den oberen Rand des Steges 13 zuläuft. Werden die beiden Stege 11, 13 entlang der Fügeachse 23 zusammengefügt, so nimmt jeder der Fügespalten 15, 17 jeweils einen Teil der Wandung des kreuzenden Steges auf. Die Gesamthöhe der so gebildeten Abstandhaltermatrix 1 entspricht dann der Breite der einzelnen Stege 11, 13.

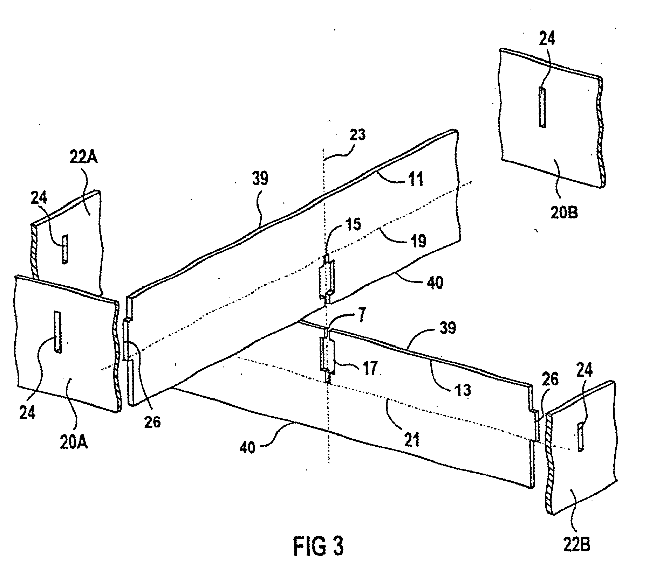

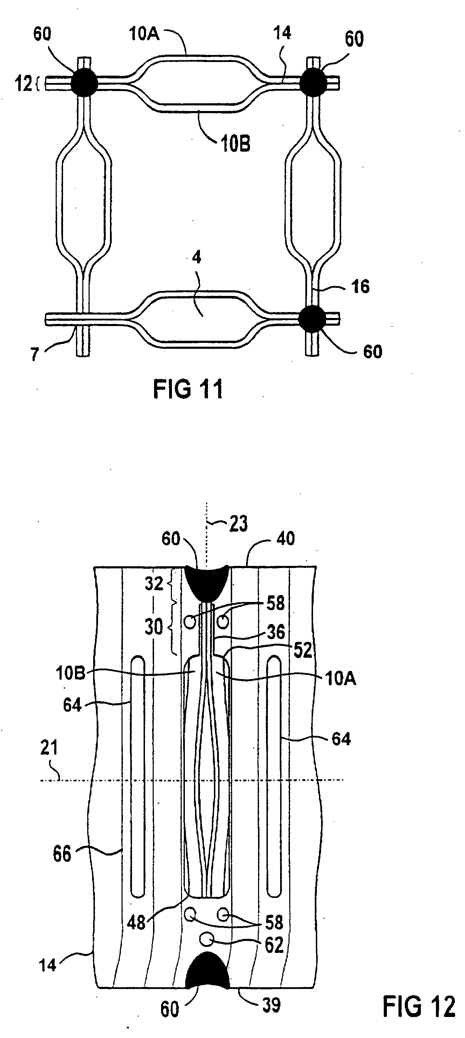

In Figur 3 ist ein Ausschnitt eines für ein Brennelement eines Kernkraftwerkes vorgesehenen Abstandhalters mit zwei zueinander parallelen ersten Außenstreifen 20A, 20B und zwei zueinander parallelen, zu den ersten Außenstreifen 20A, 20B senkrecht angeordneten zweiten Außenstreifen 22A, 22B sowie hochkant stehenden zu den ersten Außenstreifen 20A, 20B parallelen ersten Stegen 13 und hochkant stehenden zu den zweiten Außenstreifen 22A, 22B parallelen, die ersten Stege 13 kreuzenden zweiten Stegen 11 gezeigt. Dabei ist die gestellte Aufgabe erfindungsgemäß dadurch gelöst, daß
a) jedes Ende jedes Steges jeweils in einen Außenstreifen 20A, 20B, 22A, 22B eingreift und dort fixiert ist,
b) die ersten Stege 13 an ihrer von einem Außenstreifen 22A zum anderen Außenstreifen 22B verlaufenden oberen Rand 39 jeweils an einem Kreuzungspunkt mit einem zweiten Steg 11 einen auf ihren unteren Rand 40 gerichteten Fügespalt 17 aufweisen, der von einem Teil eines kreuzenden zweiten Steges 11 durchsetzt wird,
c) die zweiten Stege 11 an ihrem entsprechenden unteren Rand 40 jeweils an einem Kreuzungspunkt mit einem ersten Steg 13 einen auf ihren oberen Rand 39 gerichteten Fügespalt 15 aufweisen, der von einem Teil eines kreuzenden ersten Steges 13 durchsetzt wird,
d) jeder Fügespalt 15,17 am Rand jedes Steges durch eine metallurgische Verbindung 60 des Steges (vergleiche Figur 1 und 12) mit dem kreuzenden Steg geschlossen ist, und
e) jeder Fügespalt 17 einen Bereich 30 aufweist, der von einem Teil des kreuzenden Steges durchsetzt wird und so breit ist, daß sich die beiden Stege nicht berühren.

Jedes Ende jedes Steges greift in Figur 3 mit einer Klinke 26 jeweils in einen Schlitz 24 im jeweiligen Außenstreifen ein und ist dort vorzugsweise verschweißt.

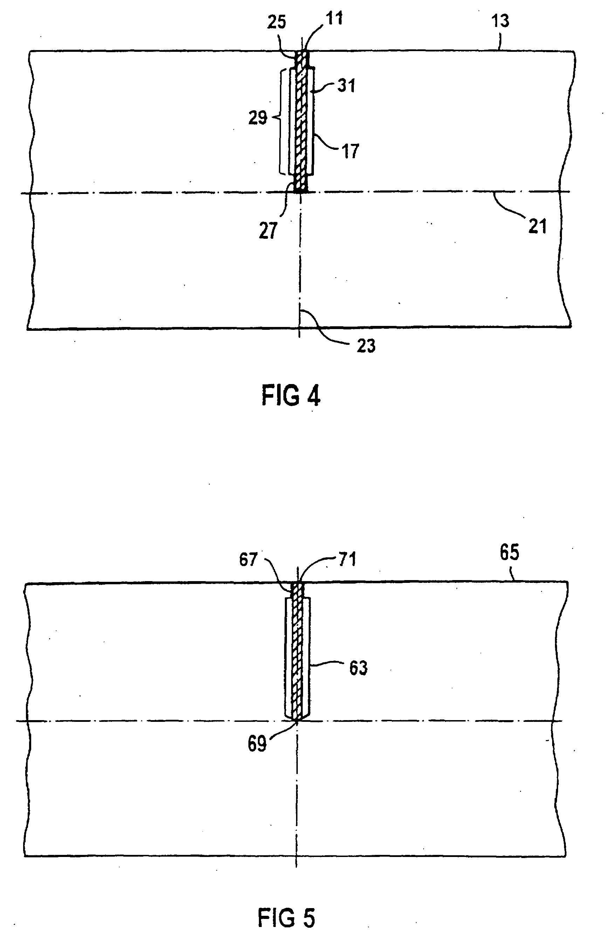

Figur 4 zeigt eine Seitenansicht des Steges 13 nach dem Zusammenfügen mit dem Steg 11. Der Fügespalt 17 hat die Wandung des Steges 11 entlang der Fügeachse 23 aufgenommen. Die Breite des Fügespaltes 17 entspricht im Bereich seines oberen und unteren Endes 25, 27 der Wandstärke des kreuzenden Steges 11, während der Bereich 29 zwischen den Enden 25, 27 eine größere Breite aufweist. Auf beiden Seiten der Fügeachse entsteht so zwischen dem Rand des Fügespaltes 17 und der Wandung des Steges 11 ein Spalt 31. Die Breite des Spaltes 31 ist so gewählt, daß Korrosionsschichten, die am Rand des Fügespaltes 17 und der Wandung des kreuzenden Steges 11 entstehen und den Spalt 31 während des Betriebes stetig verkleinern, diesen Spalt 31 über die gesamte Betriebsdauer des Abstandhalters hinweg nicht vollständig zusetzen können. Auf diese Weise wird verhindert, daß sich außerhalb der Endbereiche 25, 27 des Fügespaltes 17 ein unerwünschter Festkörperdruck auf den Steg 13 aufbauen kann.

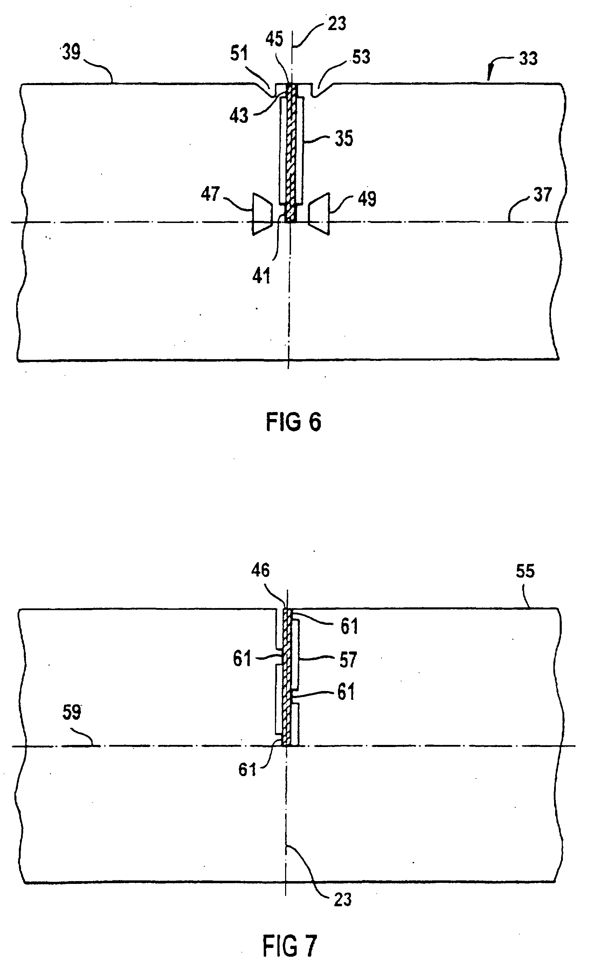

Figur 5 zeigt eine modifizierte Ausführungsform des Steges 13 in einer der Figuren 2 bis 4. Lage und Ausdehnung des Fügespaltes 63 des Steges 65 entspricht den Ausführungen zu den Figur 2 bis 4. Wie in Figur 4 weist der Fügespalt 63 im Bereich seines oberen Endes 67 eine Breite auf, die der Wandstärke eines kreuzenden Steges 63 entspricht. Im Bereich des unteren Endes 69 läuft der Fügespalt V-förmig zu. Die Wandung des kreuzenden Steges 71 ist in diesem Bereich ebenfalls V-förmig angeformt und greift wie in einem Schneidlager in das V-förmige Ende des Fügespaltes 69 ein, wodurch dieses Ende der Wandung des kreuzenden Steges 17 fixiert wird. Der in diesem Bereich durch Korrosion eventuell auftretende Festkörperdruck ist aufgrund der kleinen Anlagefläche stark vermindert.

Figur 6 zeigt eine weitere Ausführungsform eines Steges 33. Ein Fügespalt 35 erstreckt sich von einer Mittelachse 37 entlang der Fügeachse 23 bis zum oberen Rand 39 des Steges 33. Wie im Ausführungsbeispiel zu Figur 4 weist der Fügespalt 35 im Bereich seines oberen und unteren Endes 41, 43 eine Breite auf die im wesentlichen der Wandstärke eines kreuzenden Steges 45 entspricht, während der Fügespalt 35 im übrigen Bereich analog zum Fügespalt 17 in Figur 3 verbreitert ausgeführt ist. Um die durch Korrosion entstehende Längendehnung des Steges 33 im Bereich des unteren Endes 41 des Fügespaltes 35 zu vermindern sind in diesem Bereich zu beiden Seiten des Fügespaltes 35 zwei Ausnehmungen 47, 49 vorgesehen. Diese Ausnehmungen 47, 49 nehmen die durch eine Längenänderung hervorgerufene Verformung des Steges 33 auf. Im Bereich des oberen Endes 43 des Fügespaltes 35 sind zu beiden Seiten zwei Einkerbungen 51, 53 vorgesehen, die analog zu den Ausnehmungen 47, 49 eine ungewollte Längendehnung in diesem Bereich aufnehmen.

In Figur 7 ist eine weitere Ausführungsform eines Steges 55 eines Abstandhalters dargestellt. Anders als in den vorangegangenen Ausführungsbeispielen weist der sich entlang der Fügeachse 23 erstreckende Fügespalt 57 keinen Bereich auf, an dem seine Breite im wesentlichen der Wandstärke eines kreuzenden Steges 46 entspricht. Der Fügespalt 59 ist so ausgestaltet, daß sein Rand die Wandung des kreuzenden Steges 46 an einem Unterstützungspunkt 61 jeweils nur auf einer Seite der Fügeachse 23 berührt. Der dem Unterstützungspunkt 61 gegenüberliegende Rand des Fügespaltes 57 berührt die Wandung des kreuzenden Steges 46 hingegen nicht. Insgesamt sind auf beiden Seiten der Fügeachse je zwei Unterstützungspunkte 61 vorgesehen, die alternierend jeweils eine Seite der Wandung des kreuzenden Steges berühren und diesen so in seiner Lage im Fügespalt 57 fixieren.

Die Ausbildung der Fügespalten bei diesen Ausführungsbeispielen minimiert die Kontaktfläche der beiden sich kreuzenden Stege am Kreuzungspunkt derart, daß noch eine stabile Verbindung der beiden ineinander greifenden Stege sichergestellt ist, jedoch außerhalb der Kontaktbereiche genügend Raum ist, damit eine Korrosion der Stege im Fügespalt nicht zu Deformationen und einem Wachstum der Stege führt. Unter "Fügespalt" sind dabei nur die Bereiche eines Spaltes in einem Steg verstanden, die von Teilen des anderen Steges durchsetzt werden. In Fällen, in denen der Fügespalt in ein breites Fenster im Steg mündet, dieses Fenster jedoch nicht von massiven Teilen des anderen Steges durchsetzt wird, endet also der Fügespalt bereits an seiner Einmündung in das Fenster.

Solche Fenster sind aus anderen Gründen im Stand der Technik bisweilen vorgesehen. So besitzen die sich kreuzenden Stege des Abstandhalters nach der DE 25 50 932 B zwischen ihrer Oberkante und ihrer Unterkante einen Mittelbereich, der in die Gittermaschen des gitterförmigen Abstandhalters hineingewölbt ist und Noppen trägt, an denen die Brennstäbe abgestützt sind. Damit diese gewölbten Stege ineinander gesteckt werden können, tragen die Mittelbereiche beider Stege an der Kreuzungsstelle jeweils ein Fenster, wobei sich im Bereich dieser beiden Mittelteile keine massiven Teile der Stege gegenseitig durchsetzen, sondern eine gemeinsame Öffnung in beiden Stegen entsteht. Von der Oberkante des einen Stegs führt daher in einem der beiden Stege der Fügespalt bis zu diesem Fenster, während der andere Steg einen Fügespalt aufweist, der von der Unterkante des anderen Steges bis zu diesem Fenster reicht.

Ähnliche Fenster, die an der Kreuzungsstelle zweier Stege eine gemeinsame, beide Stege durchsetzende Öffnung bilden, sind auch in den US-Patenten 3,933,583 und 4,124,444 vorgesehen.

Außerhalb dieser Fenster, die einer besonderen Aufgabe dienen, besitzen die sich kreuzenden Stege Fügespalten mit einer einheitlichen Breite, die praktisch gleich der Wanddicke der Stege ist und somit nicht verhindert, daß infolge von Korrosion, die im Fügespalt abläuft, die Stege gespreizt werden und ein Längenwachstum erleiden.

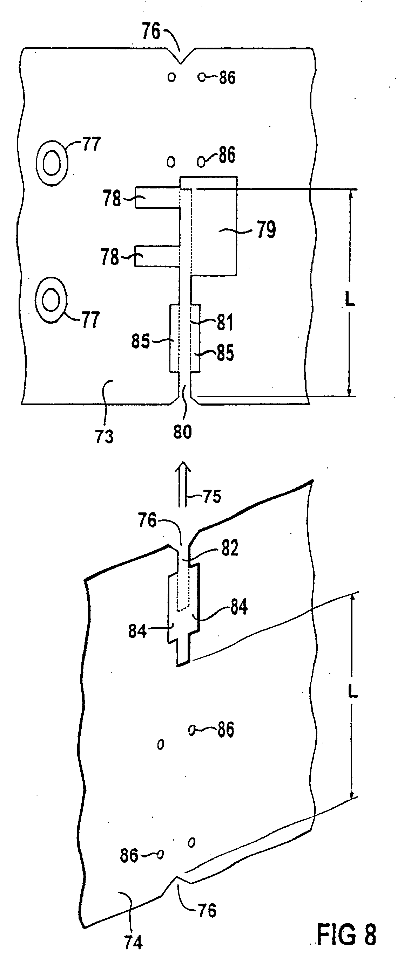

Fügespalten, die in Verbindung mit Fenstern stehen, die für die Verwendung von Noppen und Federn zum Abstützen der Brennstäbe vorgesehen sind, sind auch aus der EP 0 527 244 A bekannt. Dort trägt ein Steg auf einer Seite des Fügespaltes zwei Fenster, in der profilierte Enden einer eingesetzten Stützfeder gehalten sind. Um diese profilierten Feder-Enden einsetzen zu können, ist auf der anderen Seite des Fügespaltes eine größere Öffnung des Steges vorgesehen; die Enden der Feder werden dabei zunächst in die größeren Fenster eingesetzt, dann über den Fügespalt hinweg in die beiden Fenster auf dessen anderer Seite geschoben und verriegelt, indem die beiden Stege ineinander gesteckt werden. Bei diesem Stand der Technik trägt also nur ein Steg einen Fügespalt mit Fenstern, während der Fügespalt des anderen Steges an dieser Kreuzungsstelle eine einheitliche Breite aufweist. Figur 8 zeigt, daß auch hier eine veränderliche Breite beider Fügespalten vorteilhaft ist.

In Figur 8 sind die beiden Stege 73, 74 gezeigt, bevor sie in Richtung des Pfeiles 75 ineinander gesteckt und metallurgisch miteinander verbunden werden. Dabei tragen die Oberkanten und Unterkanten beider Stege jeweils Auskerbungen 76, die beim metallurgischen Verbinden entsprechendes Lötmaterial oder Schweißmaterial aufnehmen können. Ferner sind am Steg 73 Noppen 77 gezeigt, die - zusammen mit einer am gegenüberliegenden (nicht dargestellten) Steg abgestützten Feder - zur seitlichen Fixierung eines Brennstabs dienen.

Eine solche (nicht dargestellte) Stützfeder ist mit ihren profilierten Enden an entsprechenden Fenstern 78 auf einer Seite des Fügespaltes 80 des Steges 73 gehalten. Auf der anderen Seite des Fügespaltes 80 befindet sich ein größeres Montagefenster 79. Die zunächst in das Montagefenster 79 eingesetzten Federenden werden bei der Montage über dem Spalt 80 hinweg seitlich in die Fenster 78 hineingeschoben und sind dort verriegelt, sobald entsprechende Teile des Steges 74 in den Fügespalt 80 eingeführt sind. Diese Teile des Stegs 74, die in den Fügespalt 80 eingeführt werden und nach der Montage den Fügespalt 80 durchsetzen, sind beim Steg 73 durch die gestrichelte Kontur 81 dargestellt. Dabei ist mit L die Gesamtlänge des Fügespaltes 80 dargestellt, die durch die Abmessungen der den Fügespalt 80 durchsetzenden Teile des Steges 74 definiert ist. Im Steg 73 besitzt der Fügespalt also nur die von Teilen des anderen Steges 74 durchsetzte Gesamtlänge L. Die Breite dieses Fügespaltes 80 ist nicht konstant.

Der andere Steg 74 dagegen besitzt überhaupt kein Fenster, das zum Einsetzen der Feder erforderlich wäre. Trotzdem ist der entsprechende Fügespalt 82 dieses anderen Steges 74 ebenfalls nicht mit einer konstanten Breite ausgeführt. Vielmehr entspricht die Breite des Spaltes 82 nur an wenigen Stellen der Wanddicke des Steges 73, und dazwischen sind Verbreiterungen 84 des Fügespaltes 82 vorgesehen. Bilden sich im Fügespalt 82 daher Korrosionsschichten aus, so können diese nur an den wenigen engeren Stellen dieses Fügespaltes zu Spannungen und Deformationen führen, die sich aber im Steg ausgleichen, ohne daß es zu makroskopischen Deformationen und einem Längenwachstum des Stegs 74 kommt. Entsprechende Verbreiterungen 85 sind auch im Fügespalt 80 des Steges 73 außerhalb der Fenster 78 und 79 vorgesehen. Ferner zeigt Figur 7 noch, daß die jeweils in einen Fügespalt des anderen Steges eingeführten Teile eines Steges seitliche Warzen 86 tragen, um den anderen Steg beim Zusammenfügen der beiden Stege zu führen und seitlich zu fixieren, bis die Lötpunkte, Schweißnähte oder anderen metallurgischen Verbindungen hergestellt sind.

Somit kann bereits durch die Formgebung der Fügespalten ein wesentlicher Teil des Längenwachstums von Abstandhaltern verhindert werden, ohne daß die Konstruktion oder Metallurgie des Abstandhalters verändert werden muß.

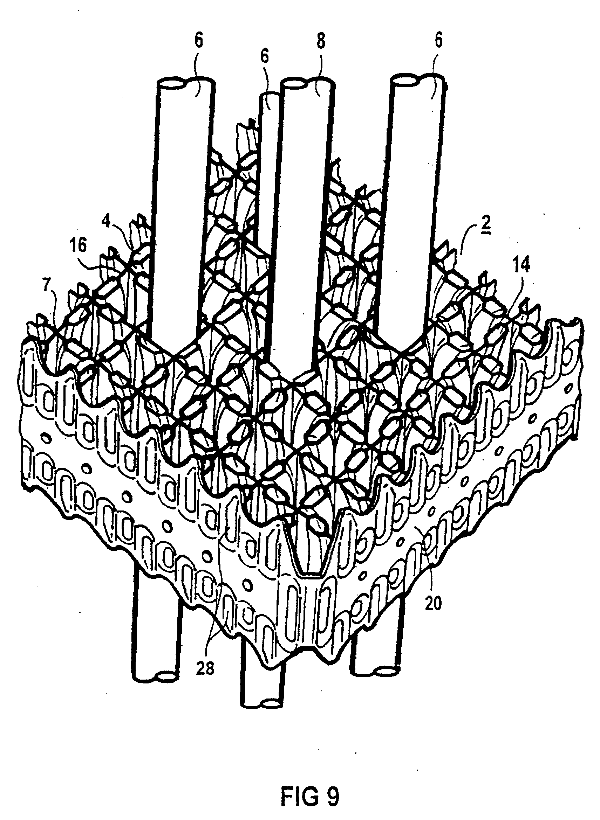

Figur 9 zeigt einen Ausschnitt aus einer Abstandhaltermatrix 2 mit sich kreuzenden Stegen 14, 16, die zwei Stegbleche 10A, 10B umfassen. Diese Abstandhalter haben sich besonders bewährt, insbesondere in Druckwasserreaktoren. Die Stegbleche 10A, 10B liegen mindestens im Bereich eines Kreuzungspunktes 7 mit einem kreuzenden Steg aneinander an. Im übrigen Bereich sind die Stegbleche 10A, 10B gegeneinander verformt und/oder gebogen, so daß zwischen ihnen Strömungskanäle 4 entstehen. Durch die Zellen der Abstandhaltermatrix ragt jeweils ein Brennstab 8 oder ein Führungsrohr 6. Über eine ähnliche bereits anhand Figur 3 erläuterte Fixierung 28 sind die Stege 14, 16 an den jeweiligen beiden Außenstreifen befestigt.

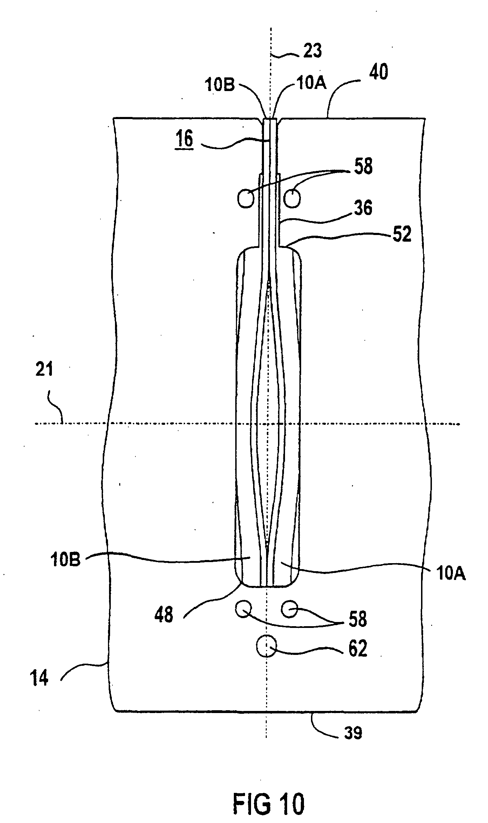

Figur 10 zeigt eine Ausführungsform eines Steges 14 eines Abstandhalters nach Figur 9. Wie die bisherigen Ausführungsformen weist auch dieser Steg 14 an einem Kreuzungspunkt mit einem kreuzenden Steg 16 einen Fügespalt 36 auf, der den kreuzenden Steg aufnimmt. Der kreuzende Steg umfaßt zwei Stegbleche 10A, 10B, die im kreuzenden Bereich aneinander anliegen, und deren gemeinsame Dicke am Kreuzungspunkt der Wandstärke des kreuzenden Steges entspricht. Der Fügespalt 36 weist nur über einen Bruchteil seiner von Teilen des anderen Steges durchsetzten Gesamtlänge eine Breite auf, die im wesentlichen der Wandstärke des kreuzenden Steges entspricht. Im übrigen Bereich ist er so breit, daß sich die beiden kreuzenden Stege 14, 16 nicht berühren.

Der Fügespalt 36 weist im Unterschied zu den Ausführungsformen der Figuren 1 bis 7 eine Mündung 52 auf, an die sich ein Fenster 48 anschließt. Dieses Fenster ist wesentlich breiter als der Fügespalt 36 und erstreckt sich über die durch die Mittelachse 21 des Steges markierte Stegmitte hinaus. Ein solches Fenster befindet sich vorzugsweise in beiden sich kreuzenden Stegen 14, 16. Jedoch kann ein solches Fenster auch nur in einem Steg 14 der kreuzenden Stege 14, 16 angebracht sein. Durch das Fenster 48 werden Stellen des Steges, die durch Korrosion gefährdet sind, ausgenommen. An diesen Stellen sind auch mehrere Fenster verschiedener Formen zur Lösung der Aufgabe möglich.

Vorzugsweise weist der Steg mindestens ein weiteres entlang einer Fügeachse 23 jedes Fügespaltes 36 angeordnetes Fenster 50 auf. Die Fenster 48, 50 nehmen Stellen des Steges aus, die besonders durch Korrosion gefährdet sind, und die damit die Längendehnung des Steges hervorrufen. Der Steg 14 trägtweiterhin Erhebungen 58, zwischen denen der kreuzende Steg gehalten ist. Diese Erhebungen sind auf einem den Fügespalt des anderen Steges durchsetzenden Teil des Steges angebracht. Aufgrund der Erhebungen werden die sich kreuzenden Stege stabiler gehalten, wenn diese aufgrund der Anbringung der Fenster 48, 50 nicht ausreichend gestützt sein sollten, insbesondere während der Montage des Abstandhalters vor dem metallurgischen Verbinden der Stege.

Figur 11 zeigt eine Zelle eines Abstandhalters 2. Wie bereits in Figur 9 gezeigt, umfaßt ein Steg 14 des genannten Abstandhalters mindestens zwei wenigstens im Bereich eines Kreuzungspunktes 7 aneinander anliegende Stegbleche 10A, 10B. Zur Bildung von Strömungskanälen 4 sind diese im übrigen Bereich gegeneinander gebogen/verformt. Ähnlich wie bei der Ausführungsform eines Abstandhalters 1, dessen Stege 3, 5 ein einzelnes Stegblech umfassen, ist auch in diesem Fall jeder Steg 14 durch mindestens eine Verbindungsstelle 60 mit einem kreuzenden Steg 16 metallurgisch verbunden. Bei dieser vorzugsweise für Druckwasserreaktoren benutzten Ausführungsform von Abstandhaltern ist es vorteilhaft, daß durch die metallurgische Verbindung 60 sowohl die sich kreuzenden Stege 14, 16 als auch die aneinander anliegenden Stegbleche im Bereich des Kreuzungspunktes 7 miteinander metallurgisch verbunden sind.

Insbesondere ist es vorteilhaft, daß sich die metallurgische Verbindung auf Bereiche erstreckt, die besonders anfällig für Korrosion sind. Dieses sind insbesondere die Bereiche der Fügespalten, die im wesentlichen die Breite der Wandstärke des kreuzenden Steges haben.

Dementsprechend zeigt Figur 12 einen Ausschnitt aus einem Steg mit einer vorteilhaften Ausführung von metallurgischen Verbindungen - hier die Schweißverbindungen 60, 62 - insbesondere zur Unterdrückung der Korrosion an den Stellen von Stegen und Fügespalten beim Abstandhalter 2, die besonders durch Korrosion gefährdet sind. Weiter sind in dieser Ausführungsform insbesondere die aneinander anliegenden Stegbleche des aufrecht stehenden Steges durch eine Verbindungsstelle 60 am oberen Rand 39 und am unteren Rand 40 des Steges mit dem kreuzenden Steg metallurgisch verbunden. Daneben sind in Figur 12 im wesentlichen Merkmale gezeigt, die bereits anhand der Figur 10 erläutert wurden. Durch eine weitere metallurgische Verbindung 62, vorzugsweise einen Schweißpunkt, in dem Bereich, in dem die Stegbleche flächig aneinander anliegen, sind die Stegbleche miteinander flächig verbunden. Der Schweißpunkt 62 wird vorteilhaft an der Stelle angebracht, an der die Korrosion besonders stark ist. Dies ist häufig eine Stelle, an der die Stegbleche relativ starke Krümmungsradien haben. Alternativ zu dieser Ausführungsform ist die Anbringung einer Ausnehmung 50 nach Figur 10 an der gleichen Stelle möglich. Weiterhin zeigt Figur 12, daß die Schweißverbindung im Bereich des Kreuzungspunktes 7 der sich kreuzenden Stege nicht nur auf den oberen 39 bzw. unteren Rand 40 der sich kreuzenden Stege begrenzt ist. Zur Vermeidung einer Längendehnung, die insbesondere durch Korrosion im schmalen Bereich 32 jedes Fügespaltes 36 entsteht, erstreckt sich die Schweißverbindung 60 praktisch entlang der ganzen Länge desjenigen Teils 32 des Fügespaltes 36, dessen Breite im wesentlichen der Wandstärke des kreuzenden Steges entspricht. Die bereits anhand Figur 10 erläuterten Erhebungen 58 sind so angebracht, daß zwischen ihnen der jeweils kreuzende Steg gehalten ist.

Zur Federung der in den Zellen der Abstandhaltermatrix geführten Brennstäbe 8 dienen bei dieser Ausführungsform jeweils die Strömungskanäle 66. Zur vorteilhaften Lagerung der in den Zellen der Abstandhaltermatrix geführten Brennstäbe entlang zweier Linien dient jeweils eine Ausnehmung 64 im Bereich eines jeweiligen Strömungskanales 66, wobei der Brennstab jeweils an den Rändern dieser Ausnehmungen 64 anliegt.

Eine besondere Ausführungsform eines Steges 13, die gegenüber den in Figur 4 bis 8 gezeigten Formen weiter modifiziert ist, zeigt Figur 13. In dieser besonderen Ausführungsform trägt der Fügespalt 18 in einem Bereich 32 eine metallurgische Verbindung 60 der sich kreuzenden Stege 13, 11, und in einem weiteren Bereich 30 ist der Fügespalt 18 so breit, daß sich die beiden Stege 11, 13 nicht berühren. Insbesondere ist der Fügespalt 18 auch so lang, daß sich die beiden Stege 11, 13 nicht berühren. Zur Federung der Brennstäbe, welche die Zellen der Abstandhaltermatrix durchsetzen, trägt der Steg 13 für jede Zelle jeweils mindestens eine aus dem Steg ausgeprägte Feder 54, und zu dem gleichen Zweck trägt der Steg 13 auch mindestens ein Paar ausgeprägte, starre Noppen 56.

Ähnlich wie bei der Ausführungsform eines Abstandhalters 2, die bereits anhand der Figur 12 erläutert wurde, erstreckt sich auch bei dieser Ausführungsform eines Abstandhalters 1, 2 die Schweißverbindung 60 im Bereich eines Kreuzungspunktes von Stegen 11, 13 mindestens über den Teil des Fügespaltes, der im wesentlichen der Wandstärke des kreuzenden Steges 11 entspricht. Darüber hinaus ist in dieser Ausführungsform der kreuzende Steg 11 zwischen zwei Erhebungen 58 des anderen Steges 13 gehalten.

## Patentansprüche

1. Abstandhalter (1,2) für ein Brennelement eines Kernkraftwerkes, aus gitterartig angeordneten Stegen (3), wobei jeder Steg (3) an einem Kreuzungspunkt (7) mit einem kreuzenden Steg einen Fügespalt (9) aufweist, der den kreuzenden Steg aufnimmt, und an einem Kreuzungspunkt zweier Stege der Fügespalt (9) jedes Steges mindestens einen engeren Bereich (25, 27), an dem die Breite des Fügespaltes im wesentlichen der Wandstärke des kreuzenden Steges entspricht und die beiden Stege metallurgisch miteinander verbunden sind, und einen anderen Bereich, der von Teilen des kreuzenden Steges durchsetzt ist und eine größere Spaltbreite besitzt, aufweist,
**dadurch gekennzeichnet,**
**dass** die beiden Stege auf der ganzen Länge der engeren Bereiche metallurgisch miteinander verbunden sind.

2. Abstandhalter nach Anspruch 1,
**dadurch gekennzeichnet,**
**dass** die Fügespalte außerhalb der metallurgischen Verbindung so breit sind, dass sich die beiden Stege nicht berühren.

3. Abstandhalter für ein Brennelement eines Kernkraftwerkes, aus gitterartig angeordneten Stegen, wobei jeder Steg (55) an einem Kreuzungspunkt (23) mit einem kreuzenden Steg (46) einen Fügespalt (57) aufweist, der den kreuzenden Steg aufnimmt,
**dadurch gekennzeichnet,**
**dass** an einem Kreuzungspunkt zweier Stege jeder Fügespalt (57) eine Breite aufweist, die in mindestens zwei von Teilen des kreuzenden Steges durchsetzten Bereichen unterschiedlich und auf der Gesamtlänge (L) größer ist als die Wandstärke des kreuzenden Steges (46), wobei mindestens drei engere, jeweils einen Unterstützungspunkt (61) bildende Bereiche vorgesehen sind, an denen der entsprechende Steg (55) jeweils nur eine Seite des kreuzenden Steges (57) abstützt.

4. Abstandhalter nach Anspruch 3,
**dadurch gekennzeichnet,**
**dass** die beiden Stege (46,55) an mindestens einem Unterstützungspunkt miteinander metallurgisch verbunden sind.

5. Abstandhalter nach einem der Ansprüche 1 bis 4,
**dadurch gekennzeichnet,**
**dass** jeder Steg (33) zu beiden Seiten jedes Fügespaltes (35) im Bereich dessen engsten Querschnitts eine dem Fügespalt (35) benachbarte Ausnehmung (47,49,51,53) aufweist.

6. Abstandhalter nach einem der Ansprüche 1 bis 5,
**dadurch gekennzeichnet,**
**dass** jeder Steg (14) mindestens ein entlang der Achse eines Fügespaltes (36) angeordnetes Fenster (48) aufweist, wobei vorzugsweise jeder Fügespalt in mindestens eines der Fenster einmündet.

7. Abstandhalter nach einem der Ansprüche 1 bis 6,
**dadurch gekennzeichnet,**
**dass** jeder Steg (14) auf einem den Fügespalt (36) des anderen Stegs durchsetzenden Teil mindestens zwei Erhebungen (58) trägt, zwischen denen der andere Steg (16) gehalten ist.

## Claims

1. Spacer (1, 2) for a fuel element of a nuclear power station, consisting of webs (3) arranged in a grid-like manner, each web (3) having, at a point of intersection (7) with an intersecting web, an assembly gap (9) which receives the intersecting web and, at a point of intersection of two webs, the assembly gap (9) of each web having at least one narrower region (25, 27), at which the width of the assembly gap corresponds essentially to the wall thickness of the intersecting web and the two webs are connected metallurgically to one another, and another region, through which parts of the intersecting web pass and which possesses a larger gap width, **characterized in that** the two webs are connected metallurgically to one another over the entire length of the narrower regions.

2. Spacer according to Claim 1, **characterized in that**, outside the metallurgical connection, the assembly gaps have a width such that the two webs are not in contact with one another.

3. Spacer for a fuel element of a nuclear power station, consisting of webs arranged in a grid-like manner, each web (55) having, at a point of intersection (23) with an intersecting web (46), an assembly gap (57) which receives the intersecting web, **characterized in that**, at a point of intersection of two webs, each assembly gap (57) has a width which is different in at least two regions through which parts of the intersecting web pass and is greater than the wall thickness of the intersecting web (46) over the entire length (L), there being provided at least three narrower regions which form in each case a supporting point (61) and on which the corresponding web (55) supports in each case only one side of the intersecting web (57).

4. Spacer according to Claim 3, **characterized in that** the two webs (46, 55) are connected metallurgically to one another at at least one supporting point.

5. Spacer according to one of Claims 1 to 4, **characterized in that** each web (33) has on both sides of each assembly gap (35), in the region of the narrowest cross section of the latter, a recess (47, 49, 51, 53) which is adjacent to the assembly gap (35).

6. Spacer according to one of Claims 1 to 5, **characterized in that** each web (14) has at least one window (48) arranged along the axis of an assembly gap (36), preferably each assembly gap issuing into at least one of the windows.

7. Spacer according to one of Claims 1 to 6, **characterized in that** each web (14) carries, on a part passing through the assembly gap (36) of the other web, at least two elevations (58) between which the other web (16) is held.

## Revendications

1. Entretoise (1, 2) pour un assemblage combustible d'une centrale nucléaire constituée de lames (3) disposées à la manière d'un réseau, chaque lame (3) ayant, en un point (7) d'intersection avec une lame qui la croise, une fente (9) d'assemblage qui reçoit la lame qui la croise et, en un point d'intersection de deux lames, la fente (9) d'assemblage de chaque lame a au moins une partie (25, 27) étroite où la largeur de la fente d'assemblage correspond sensiblement à l'épaisseur de la paroi de la lame qui la croise et où les deux lames sont reliées entre elles métallurgiquement et une autre partie qui est traversée par des parties de la lame qui la croise et qui a une largeur de fente plus grande,
**caractérisée**
**en ce que** les deux lames sont reliées entre elles métallurgiquement sur toute la longueur des parties étroites.

2. Entretoise suivant la revendication 1,
**caractérisée**
**en ce que** les fentes d'assemblage sont, en dehors de la liaison métallurgique, si larges que les deux lames ne se touchent pas.

3. Entretoise pour un assemblage combustible d'une centrale nucléaire constituée de lames disposées à la manière d'un réseau, chaque lame (55) ayant, en un point (23) d'intersection avec une lame (46) qui la croise, une fente (57) d'assemblage qui reçoit la lame qui la croise,
**caractérisée**
**en ce qu'**en un point d'intersection de deux lames, chaque fente (57) d'assemblage a une largeur qui, dans au moins deux parties traversées par des parties de la lame qui la croise, est différente et est plus grande sur toute la longueur (L) que l'épaisseur de la paroi de la lame (46) qui la croise, dans laquelle il est prévu au moins trois parties plus étroites formant, respectivement, un point (61) de soutien et sur lesquelles la lame (55) correspondante ne soutient, respectivement, qu'un côté de la lame (57) qui la croise.

4. Entretoise suivant la revendication 3,
**caractérisée**
**en ce que** les deux lames (46, 55) sont reliées métallurgiquement l'une à l'autre en au moins un point de soutien.

5. Entretoise suivant l'une des revendications 1 à 4,
**caractérisée**
**en ce que** chaque lame (33) a, de part et d'autre de chaque fente (35) d'assemblage, dans la partie de sa section transversale la plus étroite un évidement (47, 49, 51, 53) voisin de la fente (35) d'assemblage.

6. Entretoise suivant l'une des revendications 1 à 5,
**caractérisée**
**en ce que** chaque lame (14) a au moins une fenêtre (48) disposée le long de l'axe d'une fente (36) d'assemblage, chaque fente d'assemblage débouchant de préférence dans au moinsl'une des fenêtres.

7. Entretoise suivant l'une des revendications 1 à 6,
**caractérisée**
**en ce que** chaque lame (14) porte sur une partie passant dans la fente (36) d'assemblage de l'autre lame au moins deux bossages (58) entre lesquels l'autre lame (16) est maintenue.
